# EUROPÄISCHE PATENTSCHRIFT

(11) **EP 1 837 441 B1**
(45) Veröffentlichungstag und Bekanntmachung des Hinweises auf die Patenterteilung: **19.11.2008**
(21) Anmeldenummer: 06026930.5
(22) Anmeldetag: 27.12.2006
(51) Int. Cl.: E01C 9/00, E01C 5/08

(54) **Parkplatz**
Parking place
Place de parking

(30) Priorität: 20.03.2006 DE 102006013095
(43) Veröffentlichungstag der Anmeldung: 26.09.2007
(73) Patentinhaber: Cornelis, Jan, 79279 Vörstetten (DE)
(72) Erfinder: Cornelis, Jan, 79211 Denzlingen (DE)
(74) Vertreter: Huwer, Andreas

(56) Entgegenhaltungen:
- EP-A1- 0 675 229
- DE-A1- 4 010 036

## Beschreibung

Die Erfindung betrifft einen Kraftfahrzeugstellplatz, der als Bodenbelag eine Fertigteilbetonplatte aufweist, die zwei parallele, in Längsrichtung der Fertigteilbetonplatte verlaufende Fahrspuren hat, die durch einen Quersteg einstückig miteinander verbunden sind, und wobei die Fertigteilbetonplatte zwischen den Fahrspuren eine diese miteinander verbindende Durchgangsöffnung aufweist, durch die Regenwasser in das Erdreich versickern kann, und wobei in der Durchgangsöffnung eine Begrünung, insbesondere Rasen vorgesehen ist. Die Erfindung betrifft auch einen Parkplatz mit mehreren solchen in einer Reihe parallel zueinander angeordneten Kraftfahrzeugstellplätzen.

Ein derartiger Parkplatz ist aus DE 40 10 036 C2 bekannt. Er hat als Bodenbelag Ferfigteilbetonplatten, die jeweils zwei parallele Fahrspuren haben, die durch eine Vielzahl unter einem Winkel von 90° zu den Fahrspuren angeordneten Querstegen einstückig miteinander verbunden sind. Die Querstege haben alle die gleichen Querschnittsabmessungen und sind durch parallele, gleichbreite schlitzförmige Durchgangsöffnungen voneinander beabstandet In Längsrichtung der Fahrspuren weisen die Durchgangsöffnungen eine geringere Abmessung auf als die Querstege. In den Durchgangsöffnungen wachsen Gräser, deren Wurzeln die Fertigteilbetonplatte mit dem Erdboden verbinden. Die großflächigen Fertigteilbetonplatten liegen aber auch aufgrund ihrer Größe und ihres Gewichts sicher auf dem Erdboden auf und können daher gleich nach dem Verlegen voll belastet werden. Durch die Durchgangsöffnungen können Niederschläge in das Erdreich versickern. Dies ist jedoch nur in begrenztem Maße möglich, da über die relativ schmalen Schlitze zusätzlich zu den auf die Schlitze auftreffenden Niederschlägen auch noch die auf die Querstege und die Fahrspuren auftreffenden Niederschläge abgeführt werden müssen. Es ist daher zweckmäßig, eine Kanalisation vorzusehen, durch die Oberflächenwasser in größeren Mengen abgeführt werden kann. Diese ist jedoch relativ teuer und aufwändig. Nachteilig ist bei dem Kraftfahrzeugstellplatz außerdem, dass die in den Schlitzen befindliche Begrünung für die Benutzer des Kraftfahrzeugstellplatzes optisch wenig ansprechend ist.

Aus der Praxis ist auch bereits bekannt, als Bodenbelag für einen Kraftfahrzeugstellplatz so genannte Rasenverbundsteine vorzusehen, zwischen denen eine Vielzahl von Durchgangsöffnungen gebildet sind, durch die Oberflächenwasser in ausreichendem Maße in das Erdreich versickern kann. Dadurch kann eine Kanalisation eingespart werden. Bei der Errichtung eines Parkplatzes wird zunächst an den Stellen, an denen die Kraftfahrzeugstellplätze sein sollen, eine Kiesschicht als Unterbau aufgebracht Auf der Kiesschicht werden die Rasenverbundsteine verlegt. Danach wird in die Durchgangsöffnungen eine Mischung aus Sand und Mutterboden eingefüllt, auf der Rasen ausgesät wird. Das Verlegen der Rasenverbundsteine ist also relativ zeitaufwändig und teuer. Außerdem haben die Rasenverbundsteine den Nachteil, dass sie nach dem Verlegen etwa vier bis sechs Wochen ruhen müssen, bevor der Parkplatz mit einem PKW befahren werden kann. Dies ist insbesondere bei der Errichtung von größeren, gewerblich genutzten Parkplätzen, wie sie z.B. bei Supermärkten üblich sind, nachteilig, da der Parkplatz und das zugehörige Gebäude während dieser Zeit praktisch nicht genutzt werden kann.

Es besteht deshalb die Aufgabe, einen Kraftfahrzeugstellplatz der eingangs genannten Art zu schaffen, der schnell und kostengünstig errichtet und benutzt werden kann und bei dem Oberflächenwasser in ausreichendem Maße in das Erdreich gefiltert abgeführt werden kann.

Diese Aufgabe wird mit den Merkmalen des Anspruchs 1 gelöst. In vorteilhafter Weise ist es dadurch möglich, in der Fertigteilbetonplatte eine einzige, relativ großflächige Durchgangsöffnung vorzusehen, durch die Niederschläge in ausreichendem Maße - über die als Begrünung dienende Pflanzenschicht als Filter für Schadstoffe - in das Erdreich versickern können. Dabei kann die Durchgangsöffnung in Längserstreckungsrichtung der Fahrspuren eine größere Abmessung aufweisen als die lichte Weite zwischen den Fahrspuren. Da der Kraftfahrzeugstellplatz normalerweise im Bereich der Fahrspuren und des hinteren Querstegs mit den Reifen der zu parkenden PKW befahren wird, wird eine Schädigung der in der Durchgangsöffnung enthaltenen Begrünung und eine Verdichtung des in der Durchgangsöffnung befindlichen Erdreichs vermieden. Auch dadurch kann über die Durchgangsöffnung eine relativ große Menge Niederschläge in das Erdreich gefiltert abgeführt werden. Außerdem ergibt sich durch die großflächig begrünten Durchgangsöffnungen - die nicht beschädigt werden - ein optisch schöner Kraftfarzeugstellplatz, der in eine Gesamtaußenanlage ansprechend integriert sein kann.

Bei einer vorteilhaften Ausführungsform de Erfindung weist der hintere Quersteg in Längserstreckungsrichtung der Fahrspuren eine größere Abmessung auf als der vordere Quersteg, wobei die zuerst genannte Abmessung vorzugsweise mindestens doppelt so groß ist wie die entsprechende Abmessung des vorderen Querstegs. Dabei wird unter dem hinteren Quersteg derjenige Quersteg verstanden, der an der Zufahrtsseite des Kraftfahrzeugstellplatzes angeordnet ist. Durch den in Längserstreckungsrichtung der Fahrspuren breiteren hinteren Quersteg ist es auch bei einem Kraftfahrzeugstellplatz, der quer und insbesondere rechtwinklig zu einer Zufahrtsstraße angeordnet ist, möglich, mit einem Kraftfahrzeug auf den Kraftfahrzeugstellplatz einzubiegen bzw. von diesem herunter zu fahren, ohne dass die Räder des Kraftfahrzeugs die Durchgangsöffnung und die darin befindliche Begrünung überfahren. Außerdem ermöglicht der breitere hintere Quersteg ein komfortables Be- und Entladen des Kofferraums eines in Vorwärtsfahrtrichtung auf dem Kraftfahrzeugstellplatz parkenden PKW. Dabei braucht der Benutzer des PKW den Grünstreifen auch dann nicht zu betreten, wenn der PKW deutlich kürzer ist als die Fertigteilbetonplatte und bis zum vorderen Ende der Fertigteilbetonplatte vorgefahren ist.

Die vorstehend genannte Aufgabe wird auch mit den Merkmalen des nebengeordneten Anspruchs 3 gelöst. Auch bei dieser Lösung kann die Fertigteilbetonplatte eine einzige, relativ großflächige Durchgangsöffnung aufweisen. Diese ist nach vorne randoffen ausgestaltet, so dass die in der Durchgangsöffnung vorgesehene Grünschicht unterbrechungsfrei mit einer außerhalb der Fertigteilbetonplatte befindlichen Pfanzenschicht verbunden sein kann. Somit können Niederschläge in ausreichendem Maße in das Erdreich versickern und ein Austrocknen der Grünschicht wird auch in längeren Trockenphasen weitgehend vermieden. Da der Kraftfahrzeugstellplatz normalerweise im Bereich der Fahrspuren und des hinteren Querstegs mit den Reifen der zu parkenden PKW befahren wird, wird außerdem eine Schädigung der in der Durchgangsöffnung enthaltenen Begrünung und eine Verdichtung des in der Durchgangsöffnung befindlichen Erdreichs vermieden.

Bei einer bevorzugten Ausgestaltung der Erfindung erstreckt sich die Durchgangsöffnung über eine Fläche, die mindestens 22%, insbesondere mindestens 25% und bevorzugt mindestens 28% der aus der Oberfläche der Fertigteilbetonplatte und der Fläche der Durchgangsöffnung bestehenden Gesamtfläche des Kraftfahrzeugstellplatzes beträgt. Das Oberflächenwasser kann dann noch besser in das Erdreich gefiltert abgeführt werden. Bei einer Fertigteilbetonplatte, bei der die Fläche der Durchgangsöffnung etwa 28% der Gesamtfläche beträgt, entspricht der Flächenanteil der Durchgangsöffnung an der Gesamtfläche etwa demjenigen herkömmlicher Rasenverbundsteine, jedoch mit dem Vorteil, dass die Fertigteilbetonplatte wesentlich schneller zu verlegen und zu benutzen ist als die Rasenverbundsteine.

Vorteilhaft ist, wenn die Breite der Durchgangsöffnung ausgehend von ihrer Mitte zu ihrem hinteren bzw. zufahrtsseitigen Ende hin abnimmt. Dabei nimmt der Querschnitt der Durchgangsöffnung vorzugsweise an beiden Seiten der Durchgangsöffnung symmetrisch zur Längsmittelachse der Fertigteilbetonplatte ab. Ein Kraftfahrzeug kann dann in den Kraftfahrzeugstellplatz einbiegen oder aus diesem abbiegen, ohne mit den Rädern die in der Durchgangsöffnung befindliche Grünschicht zu überfahren. Im Bereich der Querschnittsabnahme kann der an die Fahrstreifen angrenzende Rand der Durchgangsöffnung schräg zur Längsrichtung der Fertigteilbetonplatte verlaufen und/oder gestuft sein. Der Rand der Durchgangsöffnung kann auch gerundet sein. Dabei ist es sogar möglich, dass der Radius der Rundung, ausgehend vom hinteren Ende der Durchgangsöffnung nach vorne zunimmt.

Die Fahrspuren sind bevorzugt frei von Durchgangsöffnungen. Dadurch wird bei kompakten Abmessungen der Fahrspuren eine hohe mechanische Festigkeit und Biegesteifigkeit der Fertigteilbetonplatte ermöglicht Die zwischen den Fahrspuren befindliche Durchgangsöffnung kann dann entsprechend groß dimensioniert sein.

Vorteilhaft ist, wenn an die Fertigteilbetonplatte zumindest am vorderen Ende der Fahrspuren ein über die Oberfläche der Fahrspuren überstehender Überfahrschutz einstückig angeformt ist. Durch den Überfahrschutz wird verhindert, dass die Benutzer des Kraftfahrzeugstellplatzes beim Einparken ihrer Kraftfahrzeuge versehentlich bis über das vordere Ende der Fertigteilbetonplatte hinausfahren und eventuell dort befindliche Pflanzen beschädigen. Der Überfahrschutz verläuft nicht durchgängig von der linken zur rechten Fahrspur der Fertigteilbetonplatte. Dadurch wird auch hier ein Abfluss von Oberflächenwasser zur anschließenden Versickerungsfläche ermöglicht. Durch den einstückig mit der Fertigteilbetonplatte verbundenen Überfahrschutz kann der Kraftfahrzeugstellplatz noch schneller errichtet werden, da ein separates Verlegen eines Bordsteins eingespart wird.

Bei einer zweckmäßigen Ausgestaltung der Erfindung weist der Bodenbelag zum Verbreitern der Fahrspuren streifenförmige Betonfertigteil-Anschlussstücke auf, die an den längsseitigen Außenrändern der Fertigteilbetonplatte parallel zu den Fahrspuren verlaufen und seitlich an diese angrenzen. Dadurch ist es möglich, für unterschiedlich breite Kraftfahrzeugstellplätze dieselbe Fertigteilbetonplatte zu verwenden. Es ergibt sich also ein einfach aufgebauter Bausatz zum Errichten eines Kraftfahrzeugstellplatzes, der mehrere Fertigteilbetonplatten und mindestens zwei Anschlussstücke aufweist.

Bei einer bevorzugten Ausführungsform der Erfindung liegen die vorderen und hinteren Enden der Fahrspuren und vorzugsweise die Querstege auf Unterstützungsstellen auf, insbesondere einem Kiesbett, wobei die Fertigteilbetonplatte derart dimensioniert ist, dass sie beim Befahren der Fahrstreifen mit einem PKW dessen Gewicht trägt, wenn sie nur auf diesen Unterstützungsstellen aufliegt Der Kraftfahrzeugstellplatz kann dadurch noch leichter und schneller errichtet werden, indem auf dem Erdboden zunächst zwei parallel zueinander verlaufende Kiesspuren aufgeschüttet und die Fertigteilbetonplatte danach mit ihrem vorderen und hinteren Quersteg auf diese Kiesspur aufgelegt wird. Nach dem Verlegen kann die Fertigteilbetonplatte sofort belastet und mit einem PKW befahren werden.

Die Fertigteilbetonplatte und ggf die Anschlussstücke weisen bevorzugt eine Stahlarmierung auf Dadurch kann die Fertigteilbetonplatte mit kompakten Abmessungen optisch zurücktretend ausgestaltet sein, so dass entsprechend viel Platz für die Durchgangsöffnung und die darin befindliche Begrünung vorhanden ist. Die Armierung verläuft vorzugsweise rahmenförmig um die Durchgangsöffnung herum.

Bei einer bevorzugten Ausgestaltung der Erfindung beträgt die Länge der Fertigteilbetonplatte mindestens 4,30 m und deren Breite mindestens 2,30 m, wobei die Durchgangsöffnung vorzugsweise eine Länge von mindestens 2,70 m und eine Breite von mindestens 0,90 m aufweist. Diese Abmessungen haben sich für einen PKW durchschnittlicher Größe als besonders praktikabel erwiesen.

Die Erfindung betrifft auch einen Parkplatz mit mehreren solchen Kraftfahrzeugstellplätzen, die in einer Reihe parallel zueinander angeordnet sind.

Vorteilhaft ist ein solcher Parkplatz , wobei die vorderen und hinteren Unterstützungsstellen der Kraftfahrzeugstellplätze jeweils streifenförmig ausgebildet sind und sich quer zur Längserstreckung der Kraftfahrzeugstellplätze über mehrere Kraftfahrzeugstellplätze erstrecken. Dabei ist es sogar möglich, dass die an den hinteren Querstegen angeordnete Unterstützungsstelle durch einen Randstreifen eines Unterbaus einer die einzelnen Kraftfahrzeugstellplätze miteinander verbindenden Straße gebildet ist.

Nachfolgend sind Ausführungsbeispiele der Erfindung näher erläutert. Es zeigt:
- Fig. 1: eine Teilaufsicht auf einen Parkplatz,
- Fig. 2: eine Teilseitenansicht des Parkplatzes, auf dem zwei sich gegenüberstehende PKW abgestellt sind,
- Fig.3: eine im Wesentlichen rahmenförmige Fertigteilbetonplatte für einen Kraftfahrzeugstellplatz,
- Fig. 4 bis 6: eine Aufsicht auf einen Kraftfahrzeugstellplatz, bei dem die Fertigteilbetonplatte eine Durchgangsöffnung hat, deren Seitenränder abschnittweise schräg zur Längsrichtung der Fahrspuren der Ferfigteilbetonplatte verlaufen,
- Fig. 7: eine Aufsicht auf einen Kraftfahrzeugstellplatz, bei dem die Seitenränder der Durchgangsöffnung gestuft sind,
- Fig. 8: eine Aufsicht auf einen Kraftfahrzeugstellplatz, bei der die Ränder der Durchgangsöffnung einen von einer geraden Linie abweichenden welligen Verlauf haben, und
- Fig. 9 bis 11: eine Aufsicht auf einen Kraftfahrzeugstellplatz, bei der die Durchgangsöffnung der Fertigteilbetonplatte an ihrem vorderen Ende randoffen ist.

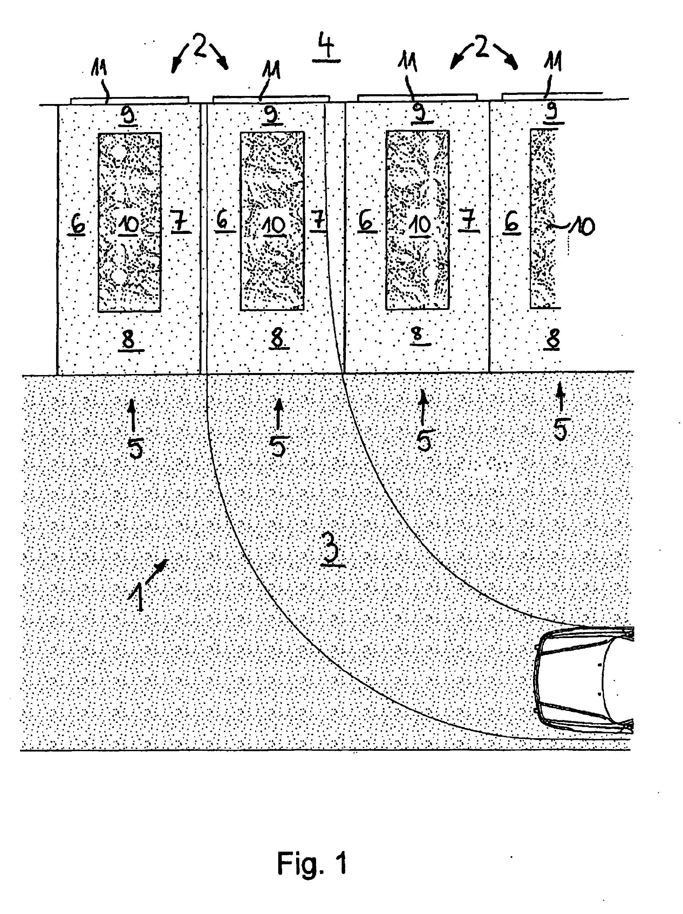

Ein in Fig. 1 im Ganzen mit 1 bezeichneter Parkplatz weist eine Vielzahl von Kraftfahrzeugstellplätzen 2 auf, die mit ihren Längserstreckungsrichtungen parallel zueinander In mehreren Reihen nebeneinander angeordnet sind. Die einzelnen Kraftfahrzeugstellplätze 2 grenzen jeweils mit ihrem hinteren, zufahrtsseitigen Ende an eine Straße 3 an, die quer zur Längserstreckung der Kraftfahrzeugstellplätze 2 verläuft. Auf dem Parkplatz 1 verlaufen mehrere dieser Straßen 3 parallel zueinander und sind durch eine in der Zeichnung nicht näher dargestellte Querverbindungsstraße miteinander verbunden.

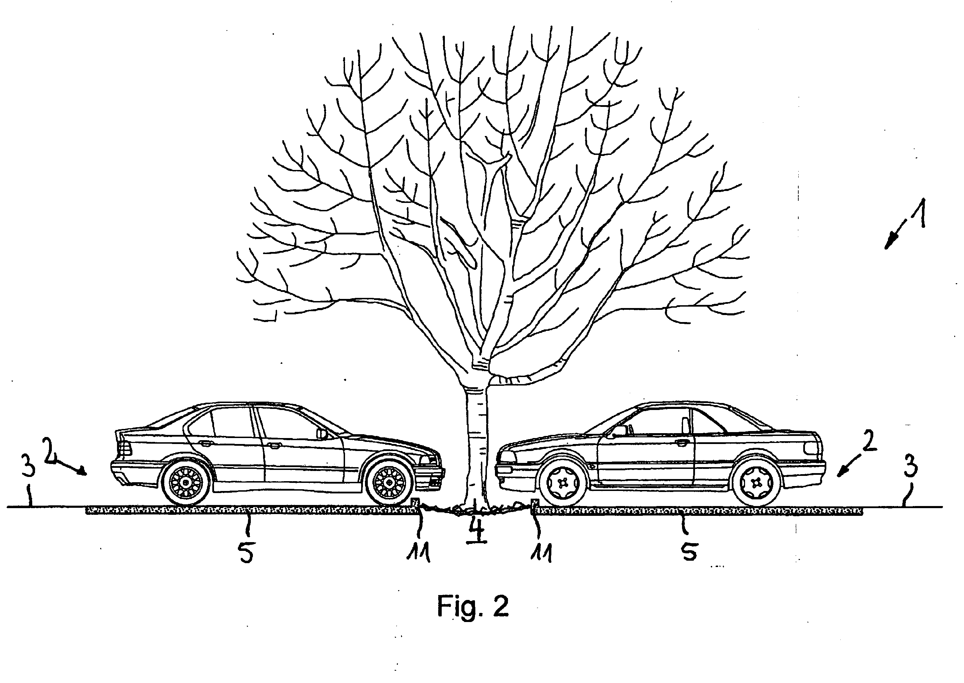

In Fig. 2 Ist erkennbar, das jeweils zwei Reihen von Kraftfahrzeugstellplätzen 2 durch eine parallel zu den Reihen verlaufende Sickermulde 4 voneinander beabstandet sind. Die Sickermulde 4 Ist mit Pflanzen, wie z.B. Bäumen bewachsen. Deutlich Ist erkennbar, dass jeweils zwei beldseits der Sickermulde 4 angeordnete Kraftfahrzeugstellplätze 2 mit ihren vorderen, von den Straßen 3 entfernten Enden paarweise einander zugewandt sind.

Als Bodenbelag haben die einzelnen Kraftfahrzeugstellplätze 2 jeweils eine einzige Fertigteilbetonplatte 5, die zwei parallele, In ihre Längsrichtung verlaufende Fahr spuren 6, 7 hat. Die Fahrspuren 6, 7 sind etwa rechteckförmig ausgestaltet und dienen beim Befahren des Kraftfahrzeugstellplatzes 2 mit einem PKW als Aufstandsund Abrollfläche für die Reifen. Die Fahrspuren 6, 7 sind vorzugsweise etwa 4,30 m lang und 0,65 m breit. Die Fahrspuren 6, 7 grenzen mit Ihrem hinteren Ende an die Straße 3 und mit Ihrem vorderen Ende an die Sickermulde 4 an.

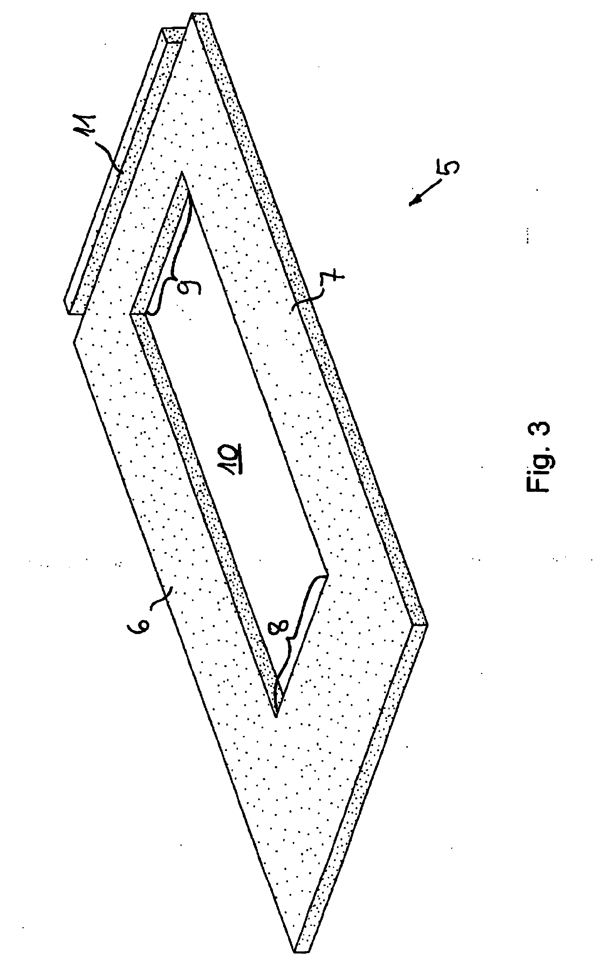

Wie in Fig. 3 besonders gut erkennbar ist, sind die Fahrspuren 6, 7 durch einen hinteren Quersteg 8 und einen vorderen Quersteg 9 rahmenförmig und einstückig miteinander verbunden. Der hintere Rand des hinteren Querstegs 8 ist in gerader Verlängerung zu den hinteren Rändern der Fahrspuren 6, 7 angeordnet. In entsprechender Weise ist der vordere Rand des vorderen Querstegs 9 In gerader Verlängerung zu den vorderen Rändern der Fahrspuren 6, 7 angeordnet.

Die Fahrspuren 6, 7 und die Querstege 8, 9 umgrenzen eine einzige Durchgangsöffnung 10, welche die Fertigteilbetonplatte 5 quer zur Ihrer Erstreckungsebene durchsetzt. Die Durchgangsöffnung 10 ist etwa rechteckig ausgestaltet und erstreckt sich durchgängig von dem hinteren Quersteg 7 zu dem vorderen Quersteg 8 und von der linken Fahrspur 6 zu der rechten Fahrspur 7. Die Breite der Durchgangsöffnung 10 beträgt bevorzugte etwa 1,00 m und die Länge etwa 2,85 m. Somit beträgt der Anteil der Fläche der Durchgangsöffnung 10 an der aus der Oberfläche der Fertigteilbetonplatte 5 und der Fläche der Durchgangsöffnung 10 bestehenden Gesamtfläche des Kraftfahrzeugstellplatzes 2 etwa 28%.

Die Durchgangsöffnung 10 Ist als belebte Schicht mit Mutterboden befüllt, der mit Rasen bewachsen Ist. Durch die Durchgangsöffnung 10 kann Regenwasser, das auf die Durchgangsöffnung 10 und die Fertigteilbetonplatte 5 fällt, In das Erdreich gefiltert versickern.

In Fig. 1 und 3 ist erkennbar, dass der hintere Quersteg 8 In Längserstreckungsrichtung der Fahrspuren 6, 7 eine größere Breite aufweist als der vordere Quersteg 9. Die Breite des hinteren Querstegs 8 beträgt bevorzugt etwa 1,00 m und die Breite des vorderen Querstegs etwa 0,45 m.

An ihrem vorderen, an die Sickermulde 4 angrenzenden Endbereich weist die Fertigteilbetonplatte 5 einen Überfahrschutz 11 auf, der durch eine einstückig an die Fahrspuren 6,7, und den vorderen Quersteg 9 angeformte Aufkantung gebildet ist. Der Überfahrschutz 11 dient als Radbremse für einen auf dem Kraftfahrzeugstellplatz zu parkenden PKW. In Fig. 3 ist erkennbar, dass der Überfahrschutz 11 unterbrechungsfrei von der linken Fahrspur 6 zur rechten Fahrspur 7 verläuft und Jeweils zwischen dem Innenrand und dem Außenrändern der Fahrspur 6, 7 endet. Die dadurch entstehenden Lücken dienen zum weiteren Abführen von oberflächenwasser und In der Folge "durch die belebte Schicht" zur gefilterten Versickerung. Selbstverständlich ist es auch möglich, den Überfahrschutz 11 nur im Bereich der Fahrspuren 7 anzuordnen.

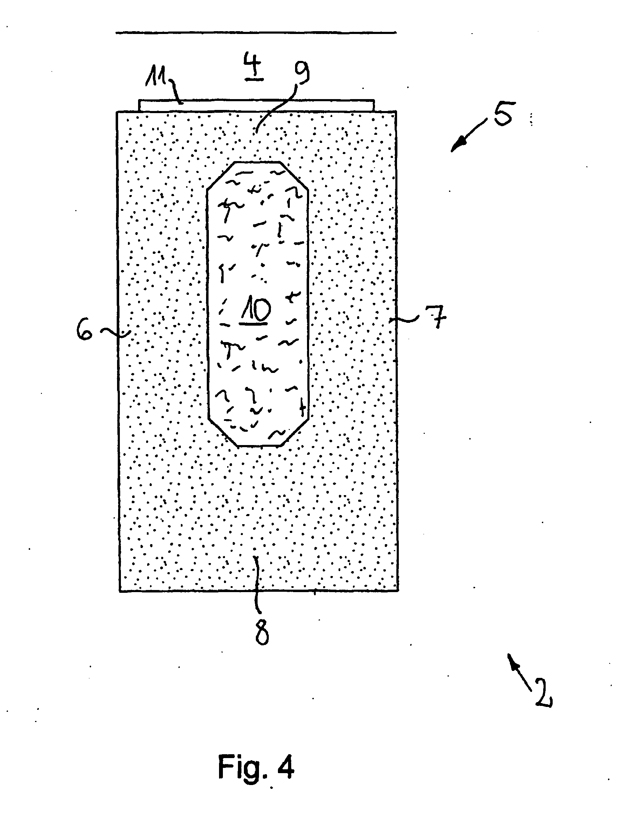

Bei den In Fig. 4 bis 7 gezeigten Ausführungsbeispielen nimmt die Breite der Durchgangsöffnung 10, jeweils ausgehend von ihrer Mitte zu ihrem hinteren Ende hin, ab. Auch hier weist der hintere Quersteg 8 In Längserstreckungsrichtung der Fahrspuren 6,7 eine größere Breite auf als der vordere Quersteg 9.

Bei dem Ausführungsbeispiel gemäß Fig. 4 sind die Seitenränder der Durchgangsöffnung 10 an Ihren dem hinteren Quersteg 8 zugewandten Endbereichen abgeschrägt. Am vorderen Endbereich der Durchgangsöffnung 10 sind entsprechende Abschrägungen vorgesehen, so dass die Durchgangsöffnung 10 punktsymmetrisch bezüglich Ihres Mittelpunkts ist.

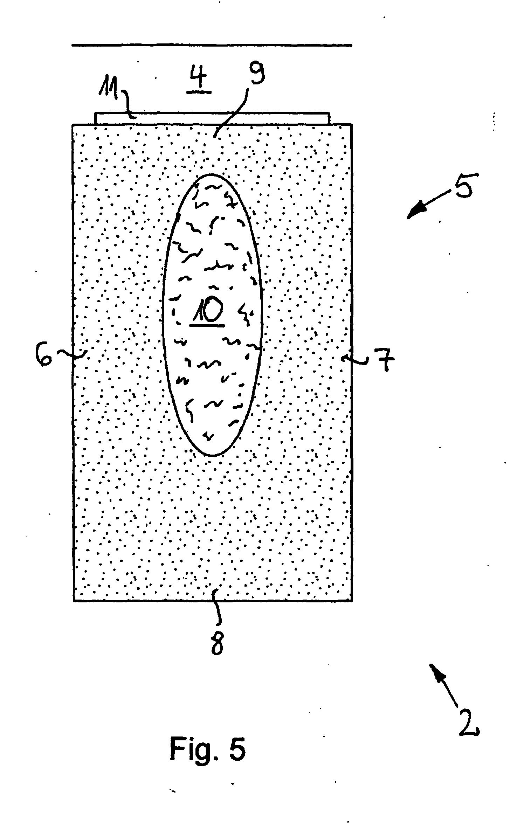

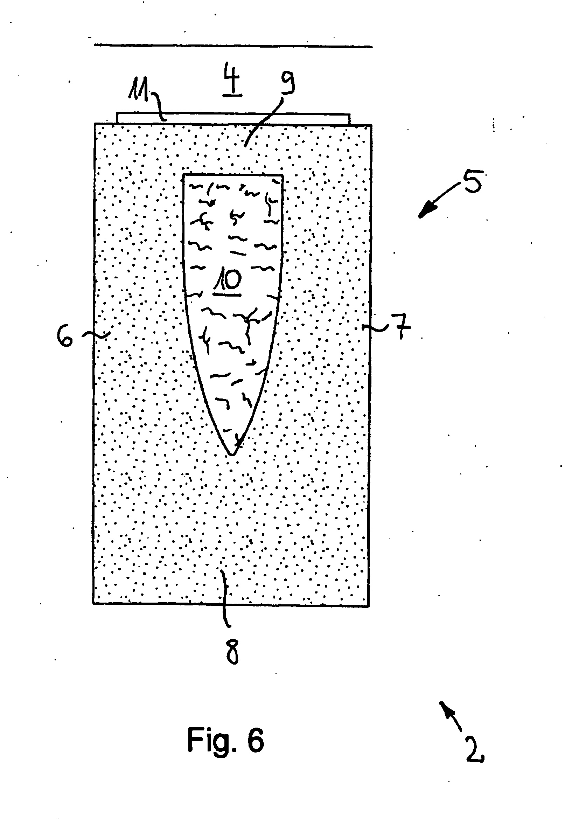

Bei dem in Fig. 5 gezeigten Kraftfahrzeugstellplatz hat die Durchgangsöffnung 10 der Fertigtellbetonplatte 5 eine etwa ovale Form. Bei dem in Fig. 6 gezeigten Ausführungsbeispiel sind die Seitenränder der Durchgangsöffnung 10 gerundet. Dabei nimmt der Radius der Rundung ausgehend vom hinteren Ende der Durchgangsöffnung 10 zu deren vorderem Ende hin zu. Der vordere Rand der Durchgangsöffnung 10 ist gerade und verläuft rechtwinklig zur Längsachse der Fertigteilbetonplatte 5.

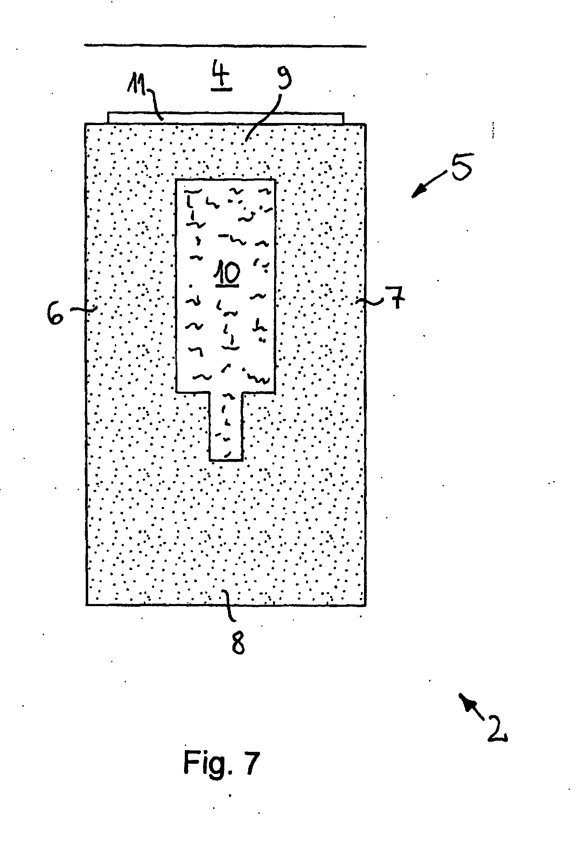

Bei der In Fig. 7 gezeigten Ferfigteilbetonplatte 5 sind die Längsränder der Durchgangsöffnung 10 an ihrem hinteren Endbereich gestuft. Dadurch ist die Breite der Durchgangsöffnung 10 im hinteren Viertel der Durchgangsöffnung 10 etwa auf ein Drittel der Breite im vorderen Bereich der Durchgangsöffnung 10 reduziert.

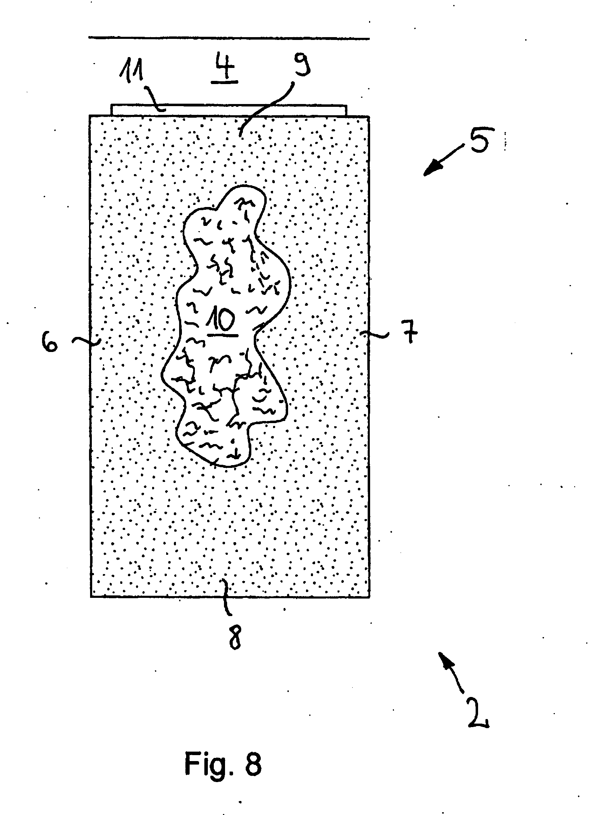

Bei dem in Fig. 8 gezeigten Kraftfahrzeugstellplatz hat der Rand der Durchgangsöffnun 10 einen kurvigen Verlauf Ausgehend vom hinteren zum vorderen Ende der Durchgangsöffnung 10 sind die Längsränder der Durchgangsöffnung 10 Jeweils mehrmals hintereinander abwechselnd in zueinander entgegengesetzte Richtungen gekrümmt. Dabei sind Rücksprünge und Vorsprünge gebildet.

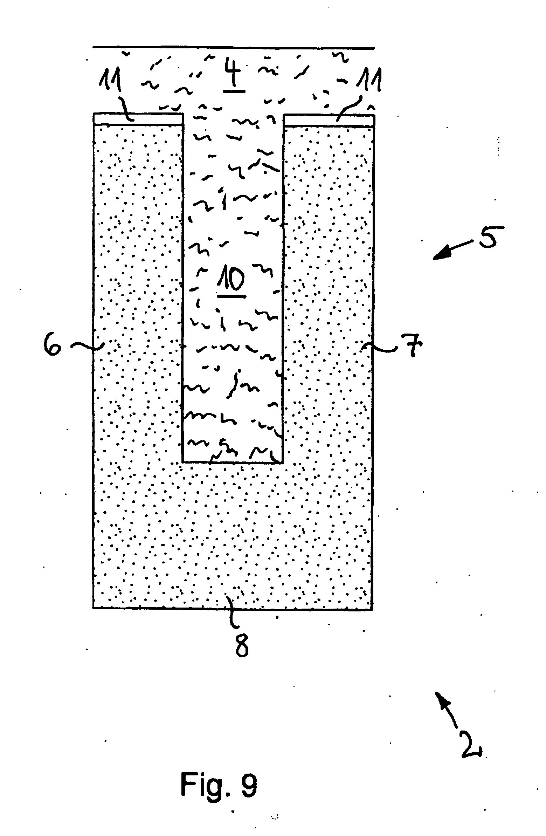

Bei den in Fig. 9 bis 11 gezeigten Ausführungsbeispielen ist die Fertigteilbetonplatte 5 jeweils im Wesentlichen U-förmig mit einem einzigen Quersteg 8 ausgebildet. Die Durchgangsöffnung 10 erstreckt sich unterbrechungsfrei vom Quersteg 8 zum vorderen Ende der Fahrspuren 6, 7. Die innerhalb der Durchgangsöffnung 10 befindliche Begrünung Ist dadurch besser vor Austrocknung geschützt.

Bei dem in Fig. 9 gezeigten Kraftfahrzeugstellplatz weist die Durchgangsöffnung 10 über ihre gesamte Länge eine konstante Breite auf Dadurch ergibt sich eine entsprechend große für den Pflanzenwuchs zur Verfügung stehende Fläche.

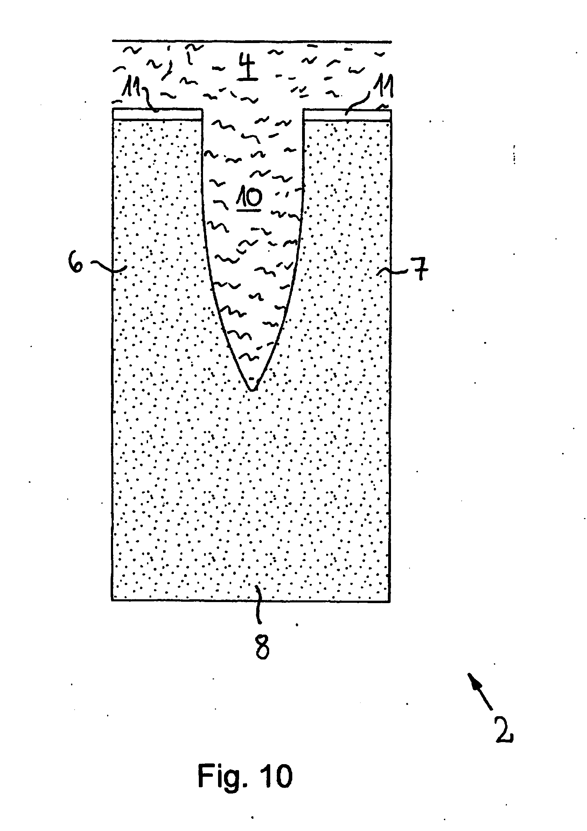

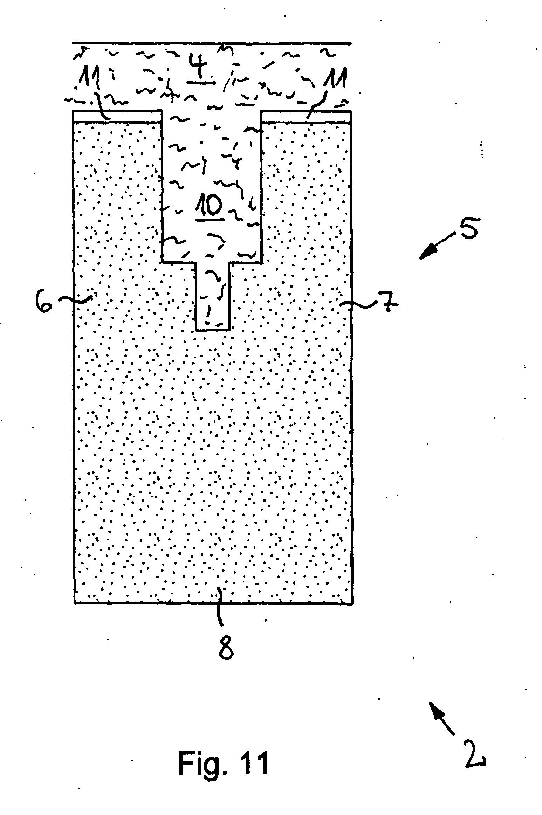

Bei den Ausführungsbeispielen gemäß Fig. 10 und 11 nimmt die Breite der Durchgangsöffnung 10, jeweils ausgehend vom hinteren zum vorderen Ende der Durchgangsöffnung 10, zumindest stellenweise zu. Bei dem In Fig. 10 gezeigten Kraftfahrzeugstellplatz ist die Durchgangsöffnung 10 etwa V-förmig ausgestaltet, wobei die an die Durchgangsöffnung 10 angrenzenden Längsränder der Fahrspuren 6, 7 konkav gekrümmt sind. Bei dem in Fig. 11 gezeigten Kraftfahrzeugstellplatz haben die Längsränder der Durchgangsöffnung 10 jeweils eine Stufe.

## Patentansprüche

1. Kraftfahrzeugstellplatz (2), der als Bodenbelag eine Fertigteilbetonplatte (5) aufweist, die zwei parallele, in Längsrichtung der Fertigteilbetonplatte (5) verlaufende Fahrspuren (6, 7) hat, die durch einen hinteren Quersteg (8) am zufahrtsseitigen Ende des Kraftfahrzeugstellplatzes (2) und einen vorderen Quersteg (9) einstückig miteinander verbunden sind, wobei die Querstege (8,9) an der Außenkontur der Fertigteilbetonplatte (5) angeordnet sind und wobei die Fertigteilbetonplatte (5) zwischen den Fahrspuren (6, 7) eine diese miteinander verbindende Durchgangsöffnung (10) aufweist, durch die Regenwasser in das Erdreich versickern kann, und wobei in der Durchgangsöffnung (10) eine Begrünung, insbesondere Rasen vorgesehen ist, **dadurch gekennzeichnet, dass** sich die Durchgangsöffnung (10) unterbrechungsfrei von dem hinteren Quersteg (8) zu dem vorderen Quersteg (9) erstreckt.

2. Kraftfahrzeugstellplatz (2) nach Anspruch 1, **dadurch gekennzeichnet, dass** der hintere Quersteg (8) in Längserstreckungsrichtung der Fahrspuren (6, 7) eine größere Abmessung aufweist als der vordere Quersteg (9), und dass die zuerst genannte Abmessung vorzugsweise mindestens doppelt so groß ist wie die entsprechende Abmessung des vorderen Querstegs (9).

3. Kraftfahrzeugstellplatz (2), der als Bodenbelag eine Fertigteilbetonplatte (5) aufweist, die zwei parallele, in Längsrichtung der Fertigteilbetonplatte (5) verlaufende Fahrspuren (6, 7) hat, die durch einen Quersteg (8) einstückig miteinander verbunden sind, und wobei die Fertigteilbetonplatte (5) zwischen den Fahrspuren (6, 7) eine diese miteinander verbindende Durchgangsöffnung (10) aufweist, durch die Regenwasser in das Erdreich versickern kann, und wobei in der Durchgangsöffnung (10) eine Begrünung, insbesondere Rasen vorgesehen ist, **dadurch gekennzeichnet dass** die Fertigteilbetonplatte (5) im Wesentlichen U-förmig ausgebildet ist, und dass die Durchgangsöffnung (10) an ihrem vorderen Ende randoffen ausgestaltet ist und sich unterbrechungsfrei von dem Quersteg (8) zum vorderen Ende der Fahrspuren (6, 7) erstreckt.

4. Kraftfahrzeugstellplatz (2) nach einem der Ansprüche 1 bis 3, **dadurch gekennzeichnet, dass** sich die Durchgangsöffnung (10) über eine Fläche erstreckt, die mindestens 22%, insbesondere mindestens 25% und bevorzugt mindestens 28% der aus der Oberfläche der Fertigteilbetonplatte (5) und der Fläche der Durchgangsöffnung (10) bestehenden Gesamtfläche des Kraftfahrzeugstellplatzes (2) beträgt.

5. Kraftfahrzeugstellplatz (2) nach einem der Ansprüche 1 bis 4, **dadurch gekennzeichnet, dass** die Breite der Durchgangsöffnung (10) ausgehend von ihrer Mitte zu ihrem hinteren Ende hin abnimmt.

6. Kraftfahrzeugstellplatz (2) nach einem der Ansprüche 1 bis 5, **dadurch gekennzeichnet, dass** die Fahrspuren (6, 7) frei von Durchgangsöffnungen sind.

7. Kraftfahrzeugstellplatz (2) nach einem der Ansprüche 1 bis 6, **dadurch gekennzeichnet, dass** an die Fertigteilbetonplatte (5) zumindest am vorderen (2) Ende der Fahrspuren (6, 7) ein über die Oberfläche der Fahrspuren (6, 7) überstehender Überfahrschutz (11) einstückig angeformt ist.

8. Kraftfahrzeugstellplatz (2) nach einem der Ansprüche 1 bis 7, **dadurch gekennzeichnet, dass** der Bodenbelag zum Verbreitern der Fahrspuren (6, 7) streifenförmige Betonfertigteil-Anschlussstücke aufweist, die an den längsseitigen Außenrändern der Fertigteilbetonplatte (5) etwa parallel zu den Fahrspuren (6, 7) verlaufen und seitlich an diese angrenzen.

9. Kraftfhrzeugstellplatz (2) nach einem der Ansprüche 1 bis 8, **dadurch gekennzeichnet, dass** die vorderen und die hinteren Enden der Fahrspuren (6, 7) und vorzugsweise die Querstege (8, 9) auf Unterstützungsstellen aufliegen, insbesondere einem Kiesbett, und dass die Fertigteilbetonplatte (5) derart dimensioniert ist, dass sie beim Befahren der Fahrstreifen (6, 7) mit einem PKW dessen Gewicht trägt, wenn sie nur auf diesen Unterstützungsstellen aufliegt.

10. Kraftfahrzeugstellplatz (2) nach Anspruch 8, **dadurch gekennzeichnet, dass** die Fertigteilbetonplatte (5) und ggf. die Anschlussstücke eine Stahlarmierung aufweisen.

11. Kraftfohrzeugstellplatz (2) nach einem der Ansprüche 1 bis 10, **dadurch gekennzeichnet, dass** die Länge der Fertigteilbetonplatte (5) mindestens 4,30 m und deren Breite mindestens 2,30 m beträgt und dass die Durchgangsöffnung (10) vorzugsweise eine Länge von mindestens 2,70 m und eine Breite von mindestens 0,90 m aufweist.

12. Parkplatz (1) mit mehreren in einer Reihe parallel zueinander angeordneten Kraftfahrzeugstellplätzen (2) nach einem der Ansprüche 1-11, wobei vorzugsweise die vorderen und hinteren Unterstützungsstellen der Kraftfahrzeugstellplätze (2) jeweils streifenförmig ausgebildet sind und sich quer zur Längserstreckung der Kraftfahrzeugstellplätze (2) über mehrere Kraftfahrzeugstellplätze (2) erstrecken.

## Claims

1. Motor vehicle parking space (2) which comprises as ground covering a prefabricated concrete slab (5) which has two parallel tracks (6, 7) which extend in the longitudinal direction of the prefabricated concrete slab (5) and which are connected to one another in one piece by a rear transverse web (8) at the entry-side end of the motor vehicle parking space (2) and by a front transverse web (9), wherein the transverse webs (8, 9) are arranged on the outer contour of the prefabricated concrete slab (5) and wherein the prefabricated concrete slab (5) has, between the tracks (6, 7), a through opening (10) which connects these tracks to one another and through which rainwater can seep into the soil, and wherein a green area, in particular lawn, is provided in the through opening (10), **characterized in that** the through opening (10) extends without interruption from the rear transverse web (8) to the front transverse web (9).

2. Motor vehicle parking space (2) according to Claim 1, **characterized in that** the rear transverse web (8) as seen in the longitudinal direction of extension of the tracks (6, 7) has a larger dimension than the front transverse web (9), and **in that** the first-mentioned dimension is preferably at least double the size of the corresponding dimension of the front transverse web (9).

3. Motor vehicle parking space (2) which as ground covering comprises a prefabricated concrete slab (5) which has two parallel tracks (6, 7) which extend in the longitudinal direction of the prefabricated concrete slab (5) and which are connected to one another in one piece by a transverse web (8), and wherein the prefabricated concrete slab (5) has, between the tracks (6, 7), a through opening (10) which connects these tracks to one another and through which rainwater can seep into the soil, and wherein a green area, in particular lawn, is provided in the through opening (10), **characterized in that** the prefabricated concrete slab (5) is of substantially U-shaped design, and **in that** the through opening (10) is designed to be open-edged at its front end and extends without interruption from the transverse web (8) to the front end of the tracks (6, 7).

4. Motor vehicle parking space (2) according to one of Claims 1 to 3, **characterized in that** the through opening (10) extends over an area which accounts for at least 22%, in particular at least 25% and preferably at least 28%, of the total area of the motor vehicle parking space (2) made up of the surface of the prefabricated concrete slab (5) and the area of the through opening (10).

5. Motor vehicle parking space (2) according to one of Claims 1 to 4, **characterized in that** the width of the through opening (10) decreases towards its rear end starting from its centre.

6. Motor vehicle parking space (2) according to one of Claims 1 to 5, **characterized in that** the tracks (6, 7) are free from through openings.

7. Motor vehicle parking space (2) according to one of Claims 1 to 6, **characterized in that** an overshoot guard (11) projecting over the surface of the tracks (6, 7) is formed in one piece on the prefabricated concrete slab (5) at least at the front end of the tracks (6, 7).

8. Motor vehicle parking space (2) according to one of Claims 1 to 7, **characterized in that**, for the purpose of widening the tracks (6, 7), the ground covering comprises strip-like prefabricated concrete connection pieces which extend approximately parallel to and laterally adjoin the tracks (6, 7) at the longitudinal outer edges of the prefabricated concrete slab (5).

9. Motor vehicle parking space (2) according to one of Claims 1 to 8, **characterized in that** the front and the rear ends of the tracks (6, 7) and preferably the transverse webs (8, 9) rest on support points, in particular a gravel bed, and **in that** the prefabricated concrete slab (5) is dimensioned such that it bears the weight of a car driving on the tracks (6, 7) if the slab rests only on these support points.

10. Motor vehicle parking space (2) according to Claim 8, **characterized in that** the prefabricated concrete slab (5) and optionally the connection pieces have a steel reinforcement.

11. Motor vehicle parking space (2) according to one of Claims 1 to 10, **characterized in that** the length of the prefabricated concrete slab (5) is at least 4.30 m and its width is at least 2.30 m, and **in that** the through opening (10) preferably has a length of at least 2.70 m and a width of at least 0.90 m.

12. Parking area (1) comprising a plurality of motor vehicle parking spaces (2) according to one of Claims 1 to 11 arranged parallel to one another in a row, wherein the front and rear support points of the motor vehicle parking spaces (2) are each preferably designed in strip form and extend transversely to the longitudinal extent of the motor vehicle parking spaces (2) over a plurality of motor vehicle parking spaces (2).

## Revendications

1. Emplacement de stationnement de véhicule automobile (2) qui présente, comme enrobement de sol, une plaque de béton partielle finie (5), dotée de deux bandes de circulation (6, 7) parallèles s'étendant dans la direction longitudinale de la plaque de béton partielle finie (5), lesdites bandes étant reliées entre elles d'un seul tenant au niveau de l'extrémité côté arrivée de l'emplacement de stationnement de véhicule automobile (2) par une traverse arrière (8) et par une traverse avant (9), les traverses étant disposées au niveau du contour extérieur de la plaque de béton partielle finie (5) et la plaque de béton partielle finie (5) comportant entre les bandes de circulation (6, 7) une ouverture de passage (10) les reliant entre elles et à travers laquelle l'eau de pluie peut s'écouler dans la terre, et de la végétation, notamment de l'herbe, étant prévue dans l'ouverture de passage (10), **caractérisé en ce que** l'ouverture de passage (10) s'étend sans interruption depuis la traverse arrière (8) jusqu'à la traverse avant (9).

2. Emplacement de stationnement de véhicule automobile (2) selon la revendication 1, **caractérisé en ce que** la traverse arrière (8) a une plus grande dimension dans la direction d'extension longitudinale des bandes de circulation (6, 7) que la traverse avant (9), et **en ce que** la première dimension évoquée mesure de préférence le double de la dimension correspondante de la traverse avant (9).

3. Emplacement de stationnement de véhicule automobile (2) qui comporte, comme enrobement de sol, une plaque de béton partielle finie (5) dotée de deux bandes de circulation (6, 7) parallèles s'étendant dans la direction longitudinale de la plaque de béton partielle finie (5), lesdites bandes étant reliées entre elles d'un seule tenant par une traverse (8) et la plaque de béton partielle finie (5) comportant entre les bandes de circulation (6, 7) une ouverture de passage (10) les reliant entre elles, à travers laquelle l'eau de pluie peut s'écouler dans la terre, et de la végétation, notamment de l'herbe, étant prévue dans l'ouverture de passage (10), **caractérisé en ce que** la plaque de béton partielle finie (5) prend pour l'essentiel une forme en U et **en ce que** l'ouverture de passage (10) est réalisée au niveau de son extrémité avant avec un bord libre et s'étend sans interruption de la traverse (8) jusqu'à l'extrémité avant des bandes de circulation (7).

4. Emplacement de stationnement de véhicule automobile (2) selon l'une quelconque des revendications 1 à 3, **caractérisé en ce que** l'ouverture de passage (10) s'étend au-delà d'une surface constituant au moins 22 %, notamment au moins 25 % et de préférence au moins 28 % de la surface totale de l'emplacement de stationnement de véhicule automobile (2) constituée par la surface de la plaque de béton partielle finie (5) et par la surface de l'ouverture de passage (10).

5. Emplacement de stationnement de véhicule automobile (2) selon l'une quelconque des revendications 1 à 4, **caractérisé en ce que** la largeur de l'ouverture de passage (10) diminue en partant de son centre vers son extrémité arrière.

6. Emplacement de stationnement de véhicule automobile (2) selon l'une quelconque des revendications 1 à 5, **caractérisé en ce que** les bandes de circulation (4, 7) sont exemptes d'ouvertures de passage.

7. Emplacement de stationnement de véhicule automobile (2) selon l'une quelconque des revendications 1 à 4, **caractérisé en ce qu'**une protection anti-dépassement (11) saillant au-delà de la surface des bandes de circulation (6, 7) est réalisée d'un seul tenant au niveau de la plaque de béton partielle finie (5) au moins au niveau de l'extrémité avant (2) des bandes de circulation (6, 7).

8. Emplacement de stationnement de véhicule automobile (2) selon l'une quelconque des revendications 1 à 7, **caractérisé en ce que** l'enrobement de sol comporte des pièces de raccordement de partie finie en béton pour élargir les bandes de circulation (6, 7), lesdites pièces s'étendant au niveau des bords extérieurs longitudinaux de la plaque de béton partielle finie (5) approximativement parallèlement aux bandes de circulation (6, 7) et jouxtant celles-ci en côté.

9. Emplacement de stationnement de véhicule automobile (2) selon l'une quelconque des revendications 1 à 8, **caractérisé en ce que** les extrémités avant et arrière des bandes de circulation (6, 7) et de préférence les traverses (8, 9) reposent sur des points d'appui, notamment un lit de gravillons, et **en ce que** la plaque de béton partielle finie (5) est dimensionnée de telle sorte qu'elle supporte le poids d'un véhicule automobile de tourisme lorsque celui-ci s'introduit sur les bandes de circulation (6, 7), lorsque ladite plaque ne repose que sur ces points d'appui.

10. Emplacement de stationnement de véhicule automobile (2) selon la revendication 8, **caractérisé en ce que** la plaque de béton partielle finie (5) et le cas échéant les pièces de raccordement comportent une armature en acier.

11. Emplacement de stationnement de véhicule automobile (2) selon l'une quelconque des revendications 1 à 10, **caractérisé en ce que** la longueur des plaque de béton partielle finie (5) mesure au moins de 4,30 m et que sa largeur mesure au moins 2,30 m et **en ce que** l'ouverture de passage (10) comporte de préférence une longueur d'au moins 2,70 m et une largeur d'au moins 0,90 m.

12. Place de parking (1) avec plusieurs emplacements de stationnement de véhicule automobile (2) selon l'une quelconque des revendications 1 à 11, les points d'appui avant et arrière des emplacements de stationnement de véhicule automobile (2) prenant de préférence respectivement la forme de bandes et s'étendant transversalement par rapport à l'extension longitudinale des places de parking de véhicule automobile (2) au-delà de plusieurs places de parking de véhicule automobile (2).
